# EUROPÄISCHE PATENTSCHRIFT

(11) **EP 0 306 787 B1**
(45) Veröffentlichungstag und Bekanntmachung des Hinweises auf die Patenterteilung: **20.04.1994**
(21) Anmeldenummer: 88114020.6
(22) Anmeldetag: 27.08.1988
(51) Int. Cl.: B65G 1/04

(54) **Verschieberegalanlage und Regalanordnung mit Arbeitseinheiten**
Movable shelving device and shelving arrangement with work units
Installation de stockage déplaçable et système de stockage avec unités de travail

(30) Priorität: 08.09.1987 DE 3730021
(43) Veröffentlichungstag der Anmeldung: 15.03.1989
(73) Patentinhaber: Kochanneck, Uwe, D-44145 Dortmund (DE)
(72) Erfinder: Kochanneck, Uwe, D-44145 Dortmund (DE)

(56) Entgegenhaltungen:
- FR-A- 2 115 764
- FR-A- 2 164 596
- US-A- 2 386 520

## Beschreibung

Die Erfindung betrifft eine Verschieberegalanlage und Regalanordnung mit Arbeitseinheiten der im Oberbegriff des Patentanspruchs 1 genannten Art.

Eine derartige Anordnung ist bekannt (DE-B-25 19 864).
Bei dieser Lageranlage sind Regalzeilen je mit mehreren übereinander und dicht nebeneinander angeordneteten Fächern, kreisförmig konzentrisch zueinander und um die gemeinsame Achse drehbar. Alle auf die innere Regalzeile folgenden drehbaren Regalzeilen weisen als Zugang zu den Fächern je mindesten eine Durchgangsöffnung auf, wobei die Durchgangsöffnungen etwa gleiche Breite besitzen.
Ferner ist ein Lagersystem bekannt (DE-C-25 27 150 C2), bei dem unter Beibehaltung der Zugänglichkeit bei noch weiterer Reduzierung des Lagertotraums, und zwar durch Einführung von schmalen Durchgriffs-öffnungen statt breiter Durchgangsöffnungen, Kleinteile in Schränken gelagert werden können, die überall leicht aufgestellt werden können im Gegensatz zu grösseren Lägern.

Ziel der vorliegenden Ausgestaltung ist es die Vorteile auch für eine Integration mit Roboter- und Computerarbeitseinheiten nutzbar zu machen und eine selbständige Systemeinheit zu erreichen, die durch die Lagerspeicherkapazität der Regalzeilen selbst versorgt, von den Robotereinheiten auf engstem Raum bedient wird und von den Computerarbeitseinheiten gesteuert und überwacht wird und durch eigene Antriebe und Sensorsysteme Ortsziele frei ansteuert und die bei Ausrüstung nur mit Computern zu einer abschliessbaren Computerarbeitseinheit wird mit freiem Zugriff zu den Regalzeilen. Dies ist gemäss der Erfindung erreicht mit den Merkmalen des Patentanspruchs 1.

Hiermit ist gegenüber dem nächstkommenden Stand der Technik erreicht, dass auf engstem Raum ein vollkommen autonomes, sich selbst steuerndes Arbeitssystem entsteht, dass sich über die Lagerspeicherkapazität der Regalzeilen selbst versorgt und das durch die Robotereinheiten in der Anlage selbst und auch ausserhalb der Anlage Arbeiten verrichten kann, wobei über die Computereinheiten die Selbststeuerung und Koordination der Regaldrehbewegungen und der Dreh- und Greifbewegungen der Robotereinheiten erreicht wird, das darüberhinaus bei Ausrüstung der Verschieberegalanlage und Regalanordnung mit Arbeitseinheiten, mit Robotersensorringen, motorischen Fahrantrieben, drehbarer Aussenverkleidung und Abdeckhaube mit Abdichtungen als in sich geschlossenes vollautomatisches Arbeitssystem, nach aussen abgeschirmt, arbeiten verrichten kann und als Prozessarbeitseinheit genutzt werden kann, die frei beweglich Ortsziele selbst ansteuert, daß bei Ausrüstung der Verschieberegalanlage und Regalanordnung nur mit Computerarbeitseinheiten die Oberfläche der Verschieberegalanlage und Regalanordnung als Arbeitsfläche genutzt werden kann und der Benutzer von einem Bedienungspunkt die Arbeitsgeräte und Gegenstände, die auf der Arbeitsfläche stehen, durch Einschwenken leicht bedienen und erreichen kann und durch Einschwenken bis zur Zugangsöffnung freien Zugriff zu den abgelegten Gegenständen in den Regalzeilen hat und dass ohne die Dreh- und Einschwenkmöglichkeiten der Arbeitsfläche einzuschränken, jedes Fachauflagefeld erreichbar ist. Ausserdem ist der Bedienungspunkt rund um die Regalanordnung frei wählbar, und die Entnahme von Gegenständen aus den Regalzeilen kann auch von dritten Personen erfolgen, ohne die Arbeiten eines Benutzers an den Arbeitsplatten selbst einzuschränken.
Die weitere Erläuterung der Erfindung erfolgt anhand von fünf Ausführungsbeispielen, die in den Figuren dargestellt sind.
Es zeigen:
Fig. 1 einen Schnitt durch die Mittelachse einer Verschieberegalanlage und Regalanordnung mit Arbeitseinheiten als autonome, sich selbst versorgende und selbst steuernde Prozessarbeitseinheit mit strichpunktierten Linien für die möglichen Greifpositionen des Robotergreifarms vom Regalzeilen-Innenbereich nach aussen und nach Abhebung durch die mittlere Durchlassöffnung von aussen nach innen,
Fig. 2 eine Draufsicht auf die Verschieberegalanlage und Regalanordnung mit Arbeitseinheiten gemäss Fig. 1,
Fig. 3 einen Schnitt durch die Mittelachse einer Verschieberegalanlage und Regalanordnung mit Arbeitseinheiten, ausgeführt als autonome, sich selbst versorgende und und selbst steuernde Prozessarbeitseinheit mit mehreren nach aussen und nach innen wirksamen, sich unterstützenden Roboterarbeitseinheiten,
Fig. 4 einen Schnitt durch die Mittelachse einer Verschieberegalanlage und Regalanordnung mit Arbeitseinheiten, ausgeführt als halbautomatische Arbeitseinheit, mit Bedienungsstand,
Fig. 5 eine Draufsicht auf die Verschieberegalanlage und Regalanordnung mit Arbeitseinheiten gemäss der Fig. 4,
Fig. 6 einen Schnitt durch die Mittelachse einer Verschieberegalanlage und Regalanordnung mit Arbeitseinheiten, ausgeführt mit Computerarbeitseinheiten und drei Regalzeilen,
Fig. 7 einen Schnitt durch die Mittelachse einer Verschieberegalanlage und Regalanordnung mit Arbeitseinheiten, ausgeführt mit Computerarbeitseinheiten und zwei Regalzeilen,
Fig. 8 eine Vorderansicht einer Verschieberegalanlage und Regalanordnung ausgeführt mit mittiger, absenkbarer Computerarbeitseinheit und geöffneten Zugangsöffnungen und teilweise herausgezeichneter Bodentraverse,
Fig. 9 eine Draufsicht einer Verschieberegalanlage und Regalanordnung mit Arbeitseinheiten gemäss der Fig. 8. mit geschlossenen Zugangsöffnungen.

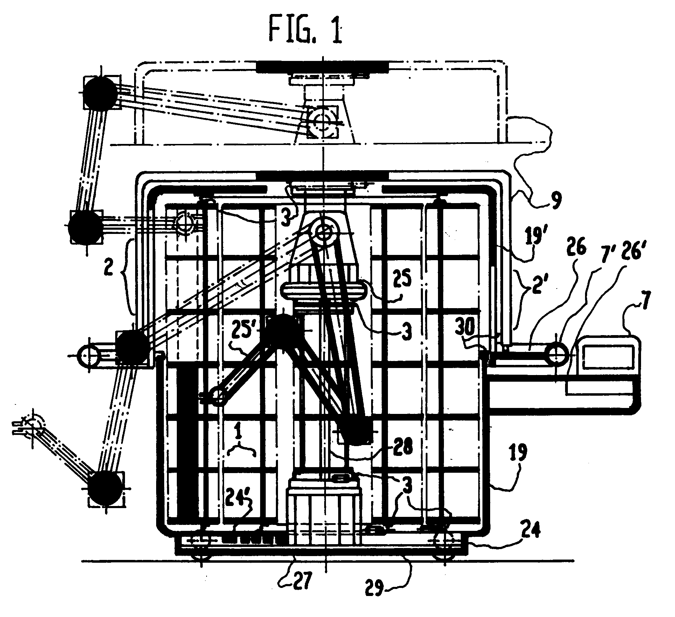

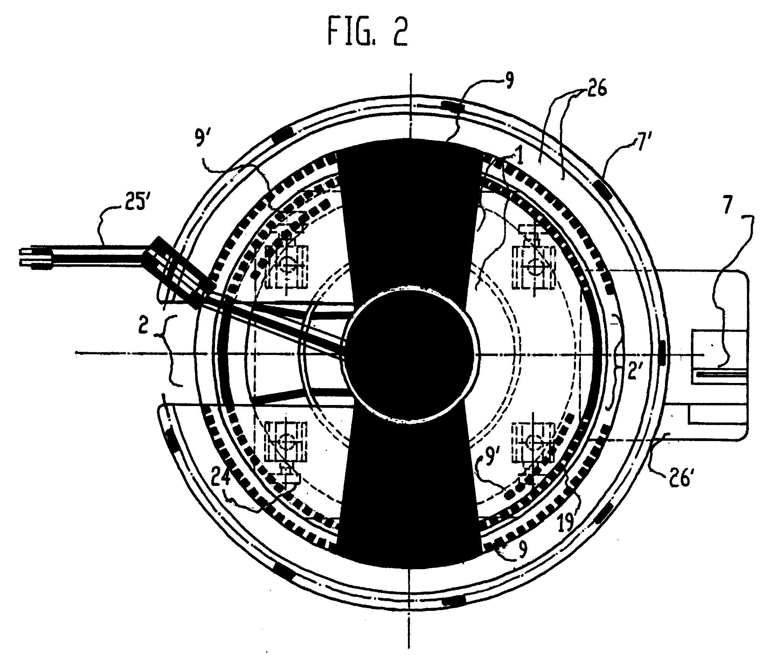

Fig. 1,2: Auf die Kopfseiten der Regalzeilen 1 sind Drehverbindungen 3 montiert, die in ihrer Ausführung in etwa gleich der Ausführung der Drehverbindungen oder Laufwerke 3 an der Fussseite der Regalzeilen 1 ausgelegt sind. Auf den kopfseitigen Drehverbindungen 3 sind Arbeitseinheiten befestigt, die in der Mittelachse eine Durchlassöffnung aufweisen, so dass die jeweils nächst liegende Arbeitseinheit in der Durchführung von Drehbewegungen durch störende Körperkanten nicht behindert wird. Die in der Mittelachse selbst liegende innerste Regalzeile 1 erhält auf der kopfseitigen Drehverbindung 3 einen Roboter 25 der mit Bildverarbeitungssensoren und mit Gelenkarmen 25′ ausgerüstet ist und mit der fussseitigen Drehverbindung 3 auf eine Hubeinrichtung 27 montiert ist. Die komplette in der Mittelachse liegende Regaleinheit 1 mit Roboter 25 ist durch die Hubeinrichtung 27 frei durch die Durchlassöffnung der nächstliegenden Arbeitseinheit der Aussenverkleidung 19′ anhebbar. Die Untergelenklängen- und Gelenkpunktausführungen des Gelenkarms 25′ des Roboters 25 sind so ausgelegt, dass die Innenseiten der Regalzeilen 1 frei bedient werden können und auch Zugriff zu den Arbeitsplatten 26, 26′ und zu Maschinen, Anlagen und Bereitstellungspunkten 32 besteht. Ausserdem ist die Auslegung der Gelenkarme 25′ so ausgeführt, dass unter Berücksichtigung der Gesamthöhe der Regalzeilen 1 und des Radius der Gesamtanlage nach Anhebung der Regalzeile 1 soweit über die Oberfläche der Arbeitseinheit 19′ hinweg, bis der Robotergelenkarm 25′ frei liegt, dieser über der Arbeitseinheit 19′ frei schwenkbar ist und ein Zugriff zu den Aussenseiten der Regalzeilen 1 möglich ist und zusätzlich zu den Arbeitsplatten 26, 26′ und Maschinen, Anlagen und Bereitstellungspunkten 32 ausserhalb der Verschieberegalanlage und Regalanordnung mit Arbeitseinheiten. Die Aussenverkleidung 19′ ist mit einer Zugangsöffnung 2 ausgeführt, die in etwa der Breite der Zugangsöffnungen 2 der einzelnen Regalzeilen entspricht, und erstreckt sich in der Höhe soweit, dass ein freier Zugriff des Roboterarms 25′ von aussen bis zu den letzten oberen Fachauflagen der Regalzeilen 1 möglich ist. Zusätzlich sind ein oder mehrere Zugangsöffnungen 2′ vorgesehen, die einen zusätzlichen, jedoch durch eine geringere Höhe als die der Zugangsöffnung 2 begrenzten Zugriff des Roboters 25 von aussen nach innen, jedoch freien Zugriff von innen nach aussen ergmöglicht. Die Aussenverkleidung 19′ trägt an ihrem Umfang die Arbeitsplatte 26, die ihrerseits an ihrem Aussenumfang einen lichtoptischen Sensorring 7′ aufnimmt. Durch den motorischen Antrieb der Drehverbindung 3, auf der die Aussenverkleidung 19′ befestigt ist, ist somit auch der mit der Aussenverkleidung 19′ fest verbunde lichtoptische Sensorring 7′ frei schwenkbar und auf jedes Ziel einstellbar, das von den unterschiedlichen Positions- und Bilderkennungssensoren, die auf dem Umfang des Sensorringes 7′ angeordnet sind, analysiert und erkannt wird. Die Regalzeilen 1 mit den Fussdrehverbindungen 3 und die innerste Regalzeile 1 mit der Hubvorrichtung 27, dem Regalkörper und der daraufbefestigten Drehverbindung 3 mit dem Roboter 25, sind auf einer Bodentraverse 29 befestigt, die mit motorisch angetriebenen Fahrantrieben 24 ausgerüstet ist. Die Energiezuführung 24′ ist ebenfalls an der Bodentraverse befestigt. Sie besteht aus einer Batterie einem aufladbaren Akkumulator, einer Generatormaschine oder einem netzkompatiblen Stromanschluss. An die Energiezuführung 24′ sind alle Stromverbraucher des Gesamtsystems angeschlossen. Die Stromzuführung zu den Antriebsmotoren der Drehverbindungen 3 auf den Kopfseiten der Regalzeilen 1 und zu weiteren Stromverbrauchern auf der Kopfseite erfolgt über den Kabelkanal 28, der in der Mittelachse der innersten Regalzeile 1 installiert ist. An der Bodentraverse ist ausserdem die Aussenverkleidung 19 befestigt, die in der Höhe soweit ausgeführt wird, dass die Aussenverkleidung 19′, die Aussenverkleidung 19 überdeckt und abschliesst. Zwischen den sich überdeckenden Aussenverkleidungen, der drehbaren Aussenverkleidung 19′ und der an der Bodentraverse 24 befestigten Aussenverkleidung 19 sind Dichtungselemente 30 auf dem Gesamtumfang eingesetzt, die einen dichten Abschluss der Anlage gewährleisten. Die Bodentraverse selbst ist zum Boden hin abgedichtet. Die Aussenverkleidung 19 erhält ausserdem eine Zugangsöffnung 2, die der Breite der Zugangsöffnung 2 der Aussenverkleidung 19′ entspricht und die den Zugriff des Roboters 25 von aussen bis zur untersten Fachauflage der Regalzeile 1 frei ermöglicht. Die Aussenverkleidung 19 nimmt ausserdem an ihrem Umfang die Arbeitsauflage 26′ auf. In die Arbeitsauflage 26 ′ sind Computereinheiten ein Programmierterminal und Radiosignalempfangseinheiten (7) eingesetzt. Das Gesamtsystem der Verschieberegalanlage und Regalanordnung mit Arbeitseinheiten wird durch die Abdeckhaube 9 überdeckt. Die Abdeckhaube 9 wird von einer Drehverbindung 3 aufgenommen, die über den Roboter 25 montiert ist,so dass auch die Arbeitseinheit Abdeckhaube 9 unabhängig und relativ zur innersten Regalzeile 1 und dem Roboter 25 motorisch eingeschwenkt werden kann. Die Abdeckhaube 9 überdeckt die innerste Durchlassöffnung für den Roboter 25 und wird seitlich, die Breite der Durgangsöffnungen 2, 2′ überlappend, über die Aussenkontor der Aussenverkleidung 19′ bis zur Arbeitsauflage 26 geführt. Durch eine Drehung der Abdeckhaubenseitenwand in die Mittellinie der Durchgangsöffnungen 2, sind diese abgeschlossen. Die Aussenverkleidung 19′ ist mit einem Seitenwandelement 9′ mit in etwa gleicher Breite wie die Abdeckhaubenseitenwand der Abdeckhaube 9 ausgerüstet, das unter der Arbeitsplatte 26 befestigt ist und die Durchgangsöffnung 2 der Aussenverkleidung 19 überlappt, wenn die Aussenverkleidung 19′ in die Mittellinie der Durchgangsöffnungen 2 eingedreht wird. Die Abdeckhaube 9 und das zugehörige Seitenwandelement 9′ sind in der überdeckungsposition zu den Durchgangsöffnungen 2 und Durchlassöffnungen in der Mittelachse der innersten Regalzeile 1 mit Dichtungen 30 ausgerüstet und abgedichtet. Die Programmbefehle zur Durchführung der Arbeitsabläufe werden über das Programmierterminal 7 frei programmiert oder über Funk der Radiosignalempfangseinheit in der Arbeitsauflage 26′ übermittelt und dann zum Steuerungscomputer weitergeleitet, von wo aus sie den einzelnen Antriebsmotoren und Steuererungselementen zur Ausführung übermittelt werden. Das Ausführungsbeispiel gemäss der Fig.1,2 wird als autonome, verfahrbare, sich selbst steuernde und selbstversorgende, nach innen wirksame Prozessdurchführungseinheit ausgerüstet oder als nach innen wirksame Prozessausführungseinheit ausgeführt oder aber als autonome, verfahrbare, sich selbst steuernde und selbstversorgende, nach aussen wirksame Arbeitseinheit ausgeführt. In der Ausführung als Prozessdurchfürungseinheit werden in die Regalzeilen 1 Apparate und Einrichtungen eingebaut und Materialien und Teile bereitgesellt. Der installierte Roboter 25 ist nun in der Lage, den Prozess durch Bedienung der Apparate und Einrichtungen durchzuführen und Materialien und Teile hinzuzufügen oder in den Regalzeilen 1 abzulegen. Die Prozessdurchführung ist hermetisch nach aussen abgedichtet und wird unter Einfügung von Kühlzellen in die Regalzeilen 1 als chemisch biologischer Prozess, elektromechanischer-, grossrechnerspezifischer- oder atomarer Prozess auf engstem Raum durchgeführt. Die hermetische Abschottung von Kühlzelleneinbauten in äusseren Regalzeilen 1 oder Prozessapparateeinbauten in den inneren Regalzeilen 1 erfolgt durch das Einfügen von abgedichteten Abdeckhauben 9 auf Drehverbindungen 3, deren rundum verlaufende Seitenwändeande zwischen den Regalzeilen 1 bis zur Bodentraverse 29 reichen und Lediglich eine Durchgangsöffnung 2 aufweisen, die auch über Seitenwandelemente 9′,wie die äusserste Abdeckhaubenverkleidung, verschlossen und abgedichtet werden kann. Bei der Ausführung als Prozessausführungseinheit werden in die Regalzeilen 1 Aggregate und Einrichtungen wie Computer und Peripheriezubehör installiert und über den Roboter 25 die einzelnen Prozessausführungsarbeiten wie Datensicherung, d.h. Eingabe und Ausgabe von Datenkassetten in den Computer und Ablage in die Regalzeile 1 durchgeführt und Austausch oder Reparatur von beschädigten Computereinheiten. In der Ausführung als Prozessdurchführungssystem oder als Prozessausführungssystem werden die Prozessabläufe innerhalb der Verschiebereganlage mit Arbeitseinheiten von aussen über die Computereinheit 7 überwacht und gesteuert oder aber durch die übermittlung von Radiosignalen ferngesteuert. Bei der Ausführung als autonome, sich selbst steuernde und selbstversorgende Arbeitseinheit nach aussen werden in den Regalzeilen 1 regallagertypische Teile vorgesehen und von dem Roboter 25 für den Austausch mit der Arbeitsplatte 26,26′ den Maschinen, Anlagen und Bereitstellungspunkten 32 und für die Durchführung von Aussenarbeiten gehandhabt.

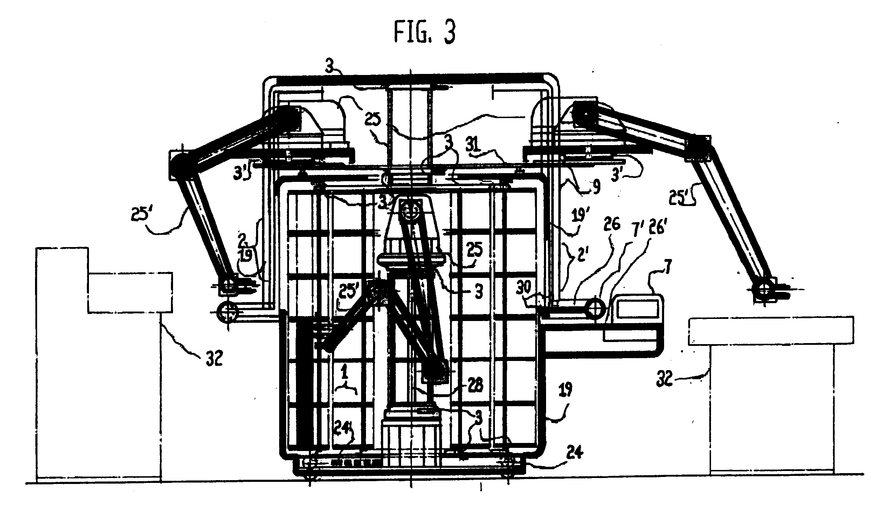

Fig. 3: Bei der Ausführung gemäss Fig. 3 sind oberhalb der Aussenverkleidung 19′ der Verschieberegalanlage und Regalanordnung mit Arbeitseinheiten gemäss dem Ausführungsbeispiel der Fig. 1 und 2, zusätzlich zu der Robotereinheit 25 im Regalzeileninnenbereich weitere Robotereinheiten 25 vorgesehen, die auf dem Teleskoptisch 31 befestigt sind und dadurch horizontal verschiebar sind. Die Roboter 25 stehen selbst wieder auf einer Drehverbindung 3′, die ein freies Drehen der Roboter 25 um die eigene Mittelachse erlaubt. Der Teleskoptisch 31 ist auf einer Drehverbindung 3 befestigt, und diese Drehverbindung 3 ist über dem Roboter 25 installiert, der von der innersten Regalzeile 1 aufgenommen wird und unter der Aussenverkleidung 19′ liegt. Die Abdeckhaube 9 überdeckt die Roboterebne mit dem Teleskoptisch 31 und umschliesst hier mit einer geschlossenen Seitenwand über den gesamten Umfang der Aussenverkleidung 19′ die Anlage. Die Abdeckhaube 9 weist Durchgangsöffnungen in etwa gleicher Breite wie für die Aussenverkleidung 19 und 19′ und die Durchgangsöffnungen 2 der Regalzeilen 1 auf. Durch diese Durchgangsöffnung 2 werden die Roboter 25 nach aussen gefahren, so dass die Gelenkgreifarme 25′ die Aussenseiten der Regalzeilen 1 durch die Durchgangsöffnungen 2 und gleichzeitig die Arbeitsplatten 26′26′ und die Maschinen, Anlagen und Bereitstellungspunkte 32 erreichen. Die Abdeckhaube 9 selbst wird im Bereich der Durchgangsöffnungen 2 durch Seitenwandelemente 9′ abgedeckt, die an der Aussenverkleidung 19′ befestigt sind und bis an die Unterkante der Deckfläche der Abdeckhaube 9 reichen und bei Eindrehen bis in die Mittellinie der Durchgangsöffnungen 2 der Aussenverkleidung 19′ abgeschlossen werden. Das Ausführungsbeispiel gemäss der Fig. 3 ist eine nach innen wirkende Prozessdurchführungs- bzw. Ausführungseinheit, die mit der davon unabhängig über ihr befindlichen und nach aussen wirkenden Arbeitseinheit kombiniert ist, so dass die Robotereinheit 25 des Regalinnenbereichs unterstützend zu arbeiten nach aussen auch durch die Durchlassöffnung nach oben wirksam werden kann und die Robotereinheiten 25 oberhalb der Regalzeilen 1 durch Hindurchführung der Greifarme 25′ durch die mittige Durchlassöffnung auch nach innen in den inneren Bereich der Regalzeilen 1 hinein zusätzlich wirksam werden können.

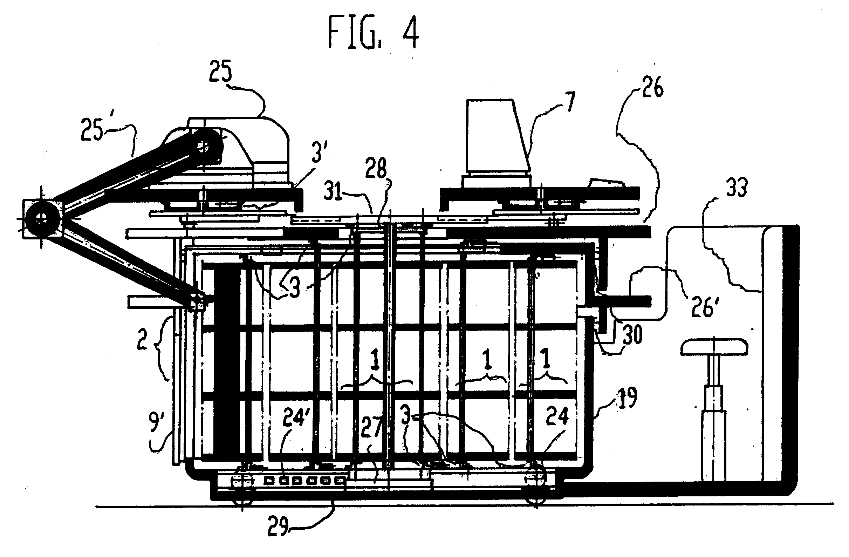

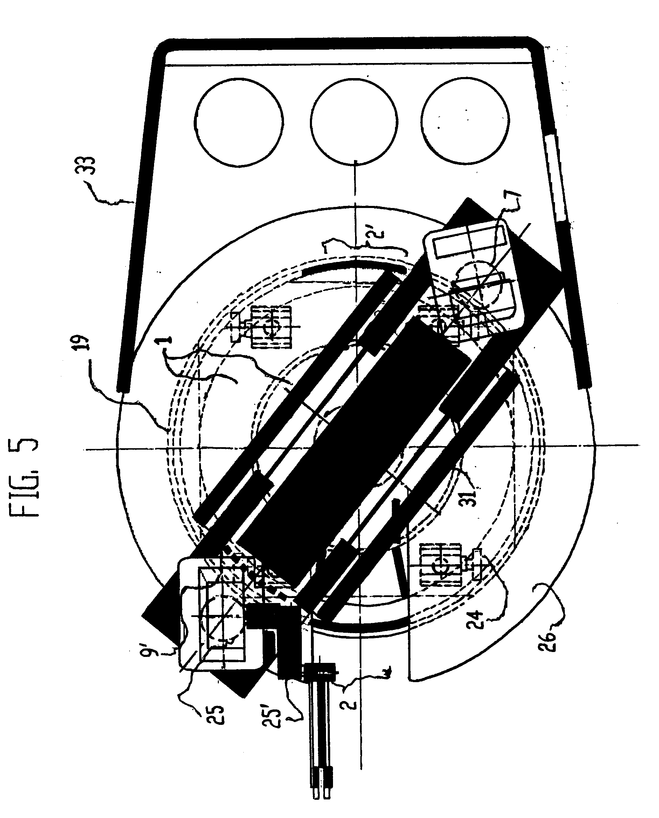

Fig. 4, 5: In diesem Ausführungsbeispiel wird ein Teleskoptisch 31 mit Robotereinheiten 25 als nach aussen wirkende Arbeitseinheit vorgesehen, die über einen an der Bodentraverse 29 befestigten Bedienungsstand 33 gesteuert und überwacht wird. Der Steuerungscomputer ist hier in die innerste Regalzeile 1 eingesetzt, und die Programmierung und Befehlseingabe erfolgt über das Programmierterminal 7, das auf dem Teleskoptisch 31 aufgestellt ist.

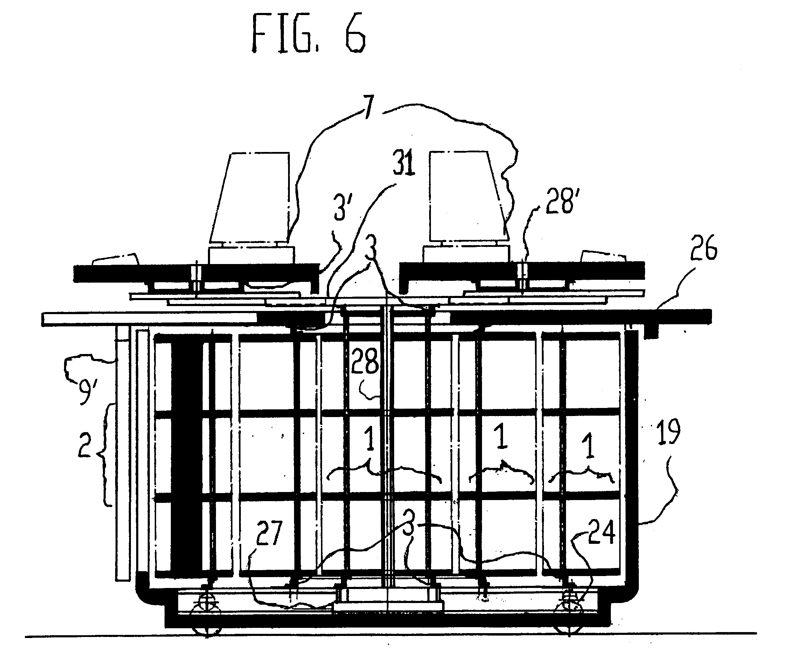

Fig. 6: In diesem Ausführungsbeispiel sind auf dem Teleskoptisch 31 Programmierterminaleinheitem 7 aufgestellt, und die Computereinheiten sind in der innersten Regalzeile 1 installiert, so dass diese Verschieberegalanlage und Regalanordnung mit Arbeitseinheiten insgesamt als Computerarbeitseinheit wirksam ist.

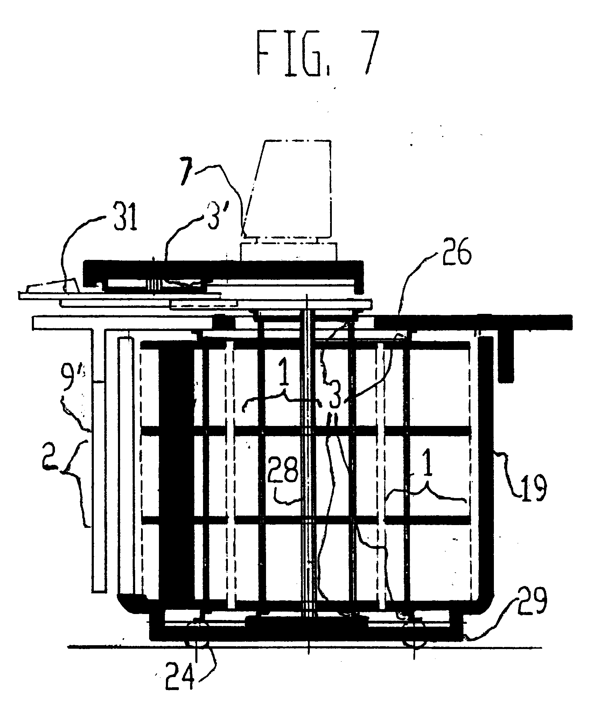

Fig. 7: In diesem Ausführungsbeispiel wird das Ausführungsbeispiel gemäss der Fig. 6 mit nur einer Computerterminaleinheit 7 ausgeführt und mit lediglich zwei Regalzeilen 1.

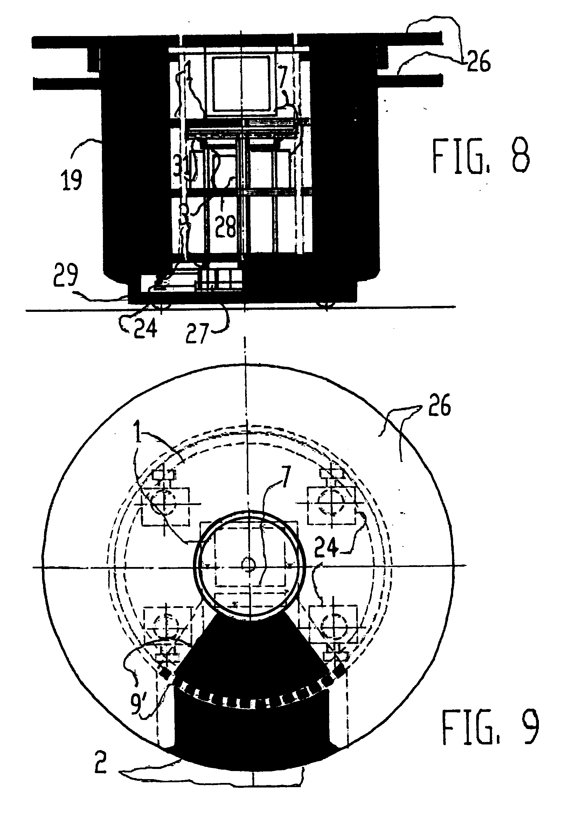

Fig. 8,9: In diesem Ausführungsbeispiel wird eine Computerterminaleinheit 7 so ausgeführt, dass sie mit den Eckmaßen die Durchlassöffnung im innersten Regalzeilenbereich nicht überschreitet und durch die Hubeinrichtung 27 abgesenkt werden kann, bis die auf das Computerterminal 7 montierte Abdeckplatte mit der Oberkante der Arbeitsplatte 26 abschliesst. Zum Zugriffsgang 2 hin wird die Anlage über die Seitenwandelement 9' abgeschlossen.

## Patentansprüche

1. Verschieberagalanlage und Regalanordnung mit Arbeitseinheiten mit kreisförmig konzentrisch zueinander und um die gemeinsame Achse drehbar angeordneten Regalzeilen (1) je mit mehreren übereinander und nebeneinander angeordneten Fächern, die durch Drehen der Regalzeilen zugänglich sind, wobei alle Regalzeilen sich dicht nebeneinander befinden und zumindest alle auf die innere Regalzeile folgenden drehbaren Regalzeilen als Zugang zu den Fächern je mindestens eine Durchgangsöffnung bei Regalanlagen und eine Durchgriffsöffnung bei kleinteileschränken aufweisen und die Durchgangs- und Durchgriffsöffnungen aller Zeilen etwa gleiche Breite besitzen, dadurch gekennzeichnet, daß auf den Kopfseiten der Regalzeilen (1) konzentrische Drehkranzringe als Drehverbindungen (3) mit mittiger Durchlaßöffnung entsprechend dem freien Innen-Ringdurchmesser der Regalzeilen und darauf befestigten Arbeitseinheiten montiert sind, die zueinander in der Höhe versetzt angeordnet sind, aufweisen, so daß die nächst innen liegenden Regalzeilen (1) mit den daraufstehenden Drehverbindungen (3) mit Arbeitseinheiten, bestehend aus Arbeitsplatten (26,26'), Robotern (25), Computern mit Programmierterminals und Radiosignalempfangseinheiten (7), Teleskoptischen (31), Außenverkleidung (19) mit Robotersensorringen (7) und Abdeckhauben (9), unabhängig voneinander und relativ zueinander und zur gemeinsamen Mittelachse frei eingeschwenkt werden können.

2. Verschieberegalanlage und Regalanordnung mit Arbeitseinheiten nach Anspruch 1, dadurch gekennzeichnet, daß die kopfseitige Drehverbindung (3) der innersten Regalzeile (1) einen Roboter (25) aufnimmt, dessen Gelenkarmlängen im Verhältnis zum Radius der Verschieberegalanlage mit Arbeitseinheiten und der Höhe der Regalzeilen (1) so abgestimmt sind, daß der Gelenkarm (25') die zur Mittelachse innen liegenden Seiten der Regalzeilen (1) bedienen kann und durch die Durchgangssöffnungen (2,2') auch zur Arbeitsplatte (26) und zu Maschinen, Anlagen und Bereitstellungspunkten (32) durchgreifen kann.

3. Verschieberegalanlage und Regalanordnung mit Arbeitseinheiten nach Anspruch 1 oder 2, dadurch gekennzeichnet, daß der Roboter der innersten Regalzeile (1) auf eine Hubeinrichtung (27) montiert ist und daß die Gelenkarmlängen im Verhältnis zum Radius der Verschieberegalanlage mit Arbeitseinheiten und der Höhe der Regalzeilen (1) so abgestimmt sind, daß der Gelenkarm (25') die Regalzeilen (1) von innen bedienen kann und auch durch die Durchgangssöffnungen (2) nach Außen zur Arbeitsplatte (26') und zu Maschinen, Anlagen und Bereitstellungspunkten (32) durchgreifen kann und über die Hubeinrichtung (27) durch die Durchlaßöffnung der außen liegenden Drehverbindungen (3) mit deren Arbeitseinheiten gehoben werden kann und daß dann der Gelenkarm (25') über den Regalzeilen (1) mit Drehverbindungen (3) und den Arbeitseinheiten frei schwenkbar ist und über die Zugangsöffnungen (2,2') die zur Mittelachse außen liegenden Seiten der Regalzeilen (1) bedienen kann und aus dieser Position mit seinem Gelenkarm (25') auch die Arbeitsplatte (26') und Maschinen, Anlagen und Bereitstellungspunkte (32) erreicht und daß bei Verschieberegalanlagen mit sehr breiten Durchgangsöffnungen (2) die gesamte innere Regalzeile (1) mit Hubeinrichtung (27), Drehverbindung (3) und Roboter 25) in der Durchgangsöffnung horizontal, in Richtung der Außenverkleidung (19), auf Fahr- und Führungsschienen verschiebbar ist und weitere Roboter (25) im inneren Bereich der Regalzeilen (1) unterstützend eingesetzt sind.

4. Verschieberegalanlage und Regalanordnung mit Arbeitseinheiten nach einem der Ansprüche 1 bis 3, dadurch gekennzeichnet, daß zusätzlich zum Roboter (25) der innersten Regalzeile (1), oberhalb der Regalzeilen (1) weitere Robotereinheiten (25) mit Teleskoptisch (31) auf eine Drehverbindung (3) montiert sind die ebenfalls eine mittige Durchlaßöffnung aufweist und darauf horizontal verschiebbar und durch Aufstellung auf eine eigene Drehverbindung (3) zur eigenen Mittelachse frei schwenkbare Robotereinheiten (25) montiert sind, die mit ihren Gelenkarmen (25') über den Regalzeilen (1) mit Drehverbindungen (3) und den Arbeitseinheiten frei beweglich sind und die Regalzeilen (1) von außen durch die Durchgangsöffnungen (2,2') bedienen können und aus derselben Position freien Zugriff zu allen Arbeitseinheiten haben, daß außerdem die Durchgangsöffnungen (2,2') durch eine Abdeckhaube (9), die auf einer Drehverbindung (3) über dem Roboter (25) der innersten Regalzeile (1) angeordnet ist, verschließbar ist und die durch Dichtungen (30), die zwischen der nicht drehbaren Außenverkleidung (19) und der drehbaren Außenverkleidung (19') und der Abdeckhaube (9) eingesetz sind, abgedichtet ist, daß außerdem Kühlzellen, Hochleistungscomputer und Prozeßapparate in die Regalzeilen (1) eingebaut sind und das Gesamtsystem zur Prozessdurchführung durch die Außenverkleidung (19,19') die Abdeckhaube (9) und die Abdichtungen(30) hermetisch nach außen abgeschlossen und von umwelteinflüssen abgeschirmt ist und daß einzelne Regalzeilen (1) untereinander durch Einfügung von Abdeckhauben (9) mit Drehverbindungen (3) und rundumverlaufenden Seitenwänden, die von den Kopfseiten der Regalzeilen (1) bis zu der Bodentraverse (29) reichen, mit zusätzlichen Randabdichtungen (30) voneinander getrennt sind und deren Durchgangsöffnungen (2,2') auch durch Seitenwandelemente (9') abgeschlossen sind.

5. Verschieberegalanlage und Regalanlanordnung mit Arbeitseinheiten nach einem der Ansprüche 1 bis 4 dadurch gekennzeichnet, daß die Verschieberegalanlage mit Arbeitseinheiten auf einer Bodentraverse (29) befestigt ist, die außerdem eine Antriebseinheit (24) und eine Energiezuführung (24') aufnimmt und das Gesamtsystem horizontal frei verfahrbar macht, daß an der Außenverkleidung (9), die über die Befestigung auf einer Drehverbindung (3) gegenüber der Mittelachse des Gesamtsystems frei schwenkbar ist, ein Sensorring (7') befestigt ist, der an seinem Umfang mit lichtoptischen Sensoren bestückt ist, die die Position des Gesamtsystems erfassen, daß außerdem alle Drehverbindungen (3) und zugehörigen Arbeitseinheiten mit motorischen Antrieben ausgerüstet sind und daß ein Steuerungscomputer mit Programmierterminal und einer Radiosignaleinheit (7) in die Arbeitseinheit (26') eingebaut ist und das Gesamtsystem der Verschieberegalanlage mit Arbeitseinheiten und allen Antriebsmotoren programmiert, steuert und überwacht, wodurch die Verschieberegalanlage mit Arbeitseinheiten zu vollkommen autonomer und vollautomatischer Durchführung von Arbeitsvorgängen, Zielanfahrten und Zieländerungen in der Lage ist.

6. Verschieberegalanlage und Regalanlanordnung mit Arbeitseinheiten nach Anspruch 5 dadurch gekennzeichnet, daß an der Außenverkleidung (19) ein Steuerstand (33) befestigt ist, über den das Gesamtsystem der Verschieberegalanlage mit Arbeitseinheiten von einer mitfahrenden Bedienungsperson halbautomatisch über den Steuerungscomputer mit Programmierterminal (7) gesteuert und überwacht wird und die Zielanfahrten und Zieländerungen programmierbar sind.

7. Verschieberegalanlage und Regalanlanordnung mit Arbeitseinheiten nach Anspruch 1 dadurch gekennzeichnet, daß die Teleskopeinheit (31) Drehverbindungen (3') mit Computereinrichtungen (7) aufnehmen und über einen mittigen Kabelkanal (28) die Stromzuführung erhalten.

8. Verschieberegalanlage und Regalanlanordnung mit Arbeitseinheiten nach Anspruch 7 dadurch gekennzeichnet, daß die kopfseitige Drehverbindung (3) der innersten Regalzeile (1) einen Computer mit Programmierterminal (7) mit einer weiteren Drehverbindung (3) und Teleskoptisch (31) aufnimmt, die das Durchmessermaß der Durchlaßöffnung der äußersten Arbeitseinheiten nicht überschreitet, daß die Hubeinrichtung (27) ein Absenken des Computers mit Programmierterminal (7) bis zum Abschluß mit der Oberkante der Arbeitsplatte (26) erlaubt, daß eine Abdeckplatte, die auf das Programmierterminal (7) gesetzt ist, die Durchlaßöffnung abgeschließt ist und daß außerdem die Durchgriffsöffnung (2) durch ein Teilsegment einer Abdeckhaube (9'), das auf einer eigenen Drehverbindung (3) frei schwenkbar ist, verschließbar ist.

## Claims

1. Movable shelving device and shelving arrangement with work units with shelf rows arranged circularly and concentrically to each other and rotatable around the joint axis, each with several compartments, arranged above and next to each other, which are accessible through turning the shelf rows, in which all shelf rows are located closely adjacent to each other and at least all rotatable shelf rows following the inner shelf row each have, as access to the compartments, at least one pass-through opening, the pass-through openings of all rows having about the same width, characterized in that rotating links (3) with on them attached work units mounted on the top sides of the shelf rows (1), the rotating links being vertically offset from each other and have a central pass-through opening, so that the next succeding inside shelf rows (1) with the rotating links (3) set on them with work units, consisting of work plates (26,26') robots (25), computers with programming terminals and radio signal receiving units (7), telescopic tables (31), sheathing (19) with robot sensor rings (7') and hoods (9) can be freely pivoted inward, independently of each other and relative to each other and to the common center axis.

2. Movable shelving device and shelving arrangement with work units according to claim 1, characterized in that the top-mounted rotating link (3) of the innermost shelf row (1) holds a robot (25), the articulated arm lengths of which are adjusted, relative to the radius of the shiftable shelf installation with work units and the height of the shelf rows (1) in such a manner that the articulated arm (25') can serve the sides of the shelf rows (1), located inside relative to the center axis and also con reach through the access openings (2,2') to the work plate (26') and to the machines, installations and set-up places (32).

3. Movable shelving device and shelving arrangement with work units according to one of the claims 1 or 2, characterized in that the robot of the innermost shelf row (1) is mounted on a lifting device (27) and that the length of the articulated arm are coordinated relative to the radius of the movable shelving device with work units and the height of the shelf rows (1) in such a manner that the articulated arm (25') can serve the shelf rows (1) from the inside and also reach through the access opening (2) outward to the work plate (26') and to the machines, installations and set-up points (32) and can be lifted via the lifting device (27) through the pass-through opening of the outside located rotating links (3) with their work units, and that then the articulated arm (25') is freely pivotable across the shelf rows (1) with rotating links (3) and the work units and can serve the sides of the shelf rows (1) located outside relative to the center axis through the access openings (2,2'), and also reach from this position with its articulted arm (25') the working plate (26') and the machines, installations and setup places (32), and that in movable shelving devices with very wide pass-through openings (2) the entire inner shelf row (1) with lifting device (27), rotating links (3) and robots (25) can be shifted horizontally in the pass-through opening, in the direction of the sheathing (19), on drive and guide rails and other robots (25) are arranged in the inner area of the shelf rows (1) in a supporting manner.

4. Movable shelving devices and shelving arrangement with work units according to one of the claims 1 to 3, characterized in that, in addition to the robot (25) of the innermost shelf row (1), other robot units (25) with telescopic table (31) are mounted on a rotating link (3) above the shelf row (1), which also has a central pass-through opening and on them robot units (25) are mounted which are horizontally shiftable, and, due to placement on an individual rotating link (3'), freely pivotable around their own center axis, which, with their articulated arms (25') are freely movable above the shelf rows (1) with rotating links (3) and the work units, and can operate he shelf rows (1) from outside through the access openings (2,2') and have, from the position, free access to all work units and, that also, the access openings (2,2') are closable by means of a hood (9) which is mounted on a rotatable link (3) above the robot (25) of the innermost shelf row (1), and which are sealed by seals (30) which are inserted between the non-rotatable sheathing (19) and the rotatable sheathing (19'), and that also cooling cells, high efficiency computer and processing apparatus are installed into the shelf rows (1) and the complete system for process execution is hermetically sealed against the outside and shielded from environmental influence by the sheathing (19,19'), the hood (9) and the seals (30), and that individual shelf rows (1) are separated from each other by the insertion of hoods (9) with rotating links (3) and surrounding lateral walls which reach from the top of the shelf rows (1) to the bottom cross-beam (29) with additional edge seals (30), and their pass-throug openings (2,2') are also closed off by lateral wall elements (9').

5. Movable shelving device and shelving arrangement with work units according to one of the claims 1 to 4, characterized in that the movable shelving device with work is attached to a bottom cross-beam (29) which also holds a drive unit (24) and an energy supply system (24') and makes the whole system freely movable in a horizontal direction, that attached to the sheathing (9) which is, relative to the center axis of the total system, freely pivotable through the attachment on a rotatable link (3), is a sensor ring (7') which is equipped, along its circumference, with light-optical sensors which register the position of the total system, that, in addition, all rotating links (3) and pertaining work units are equipped with motorized drives, a control computer with programming terminal and a radio signal unit (7) is built into the work unit (26') and programms, controls and monitors the total system of the movable shelving device with work units and all drive motors, and that thereby the shiftable shelf arrangement with work units is capable of the fully autonomous and fully automatic execution of work procedures, target approaches and target changes.

6. Movable shelving device and shelving arrangement with work units according to claim 5, charachterized in that a control stand (33) is attatched to the sheathing (19) by means of which the total system of the movable shelving device with work units can be semi-automatically controlled and monitored by an operator riding along, using a control computer with programming terminal (7), and the target approaches and target changes are programmed.

7. Movable shelving device and shelving arrangement with work units according to claim 1, characterizid in that the telescoping units (31) hold rotating links (3') with computer installations (7) and receive power supply through a central cable channel (28).

8. Movable shelving device and shelving arrangement with work units according to claim 7, characterized in that the top rotating link (3) of the innermost shelf row (1) holds a computer with programming terminal (3) and telescopic table (31) which does not exceed the diameter of the pass-through opening of the outer work units, and that through the lifting unit (27) there is a lowering of the computer with prgramming terminal (7) to the point of closure with the upper rim of the work plate (26), and that a cover plate which is set onto the programming terminal (7) closes off the pass-through opening and that, in addition, the access opening (2) can be closed or opened by the partial segment of a hood (9') which is freely pivotable on its own rotating link (3).

## Revendications

1. Installation de stockage déplaçable et système de stockage avec unités de travail comportant des rangées de rayonnages et chaque rangée comportant des cases les unes sur les autres et au voisinage immédiat les unes des autres, disposées concentriquement et pivotant les uns par rapport aux autres autour de l'axe d'ensemble et chaque élément de rayonnage pivotant, au moins à partir d'élément de rayonnage intérieur, comportant comme ouverture de passage aux cases au moins un couloir d'accès lorsque c'est une installation de rayonnage et une ouverture d'accès lorsque c'est une armoire de rangement pour des petits objets et les couloirs d'accès et les ouvertures d'accès avec à peu près de la même largeur, caractérisée en ce que sur les parties supérieurs des rangées de rayonnage (1) sont montées des couronnes de pivotement annulaires comme des assemblages de rotation (3) avec, là-dessus fixées unités de travail, qui sont déplacées en hauteur les unes par rapport aux autres et disposent d'une bande passante centrale selon le diametre intérieur des couronnes, de façon que la rangée de rayonnage intérieure (1) disposée la plus proche avec les là-dessus placées assemblages de rotation (3) et avec les unitées de travail, composées de plaques de travail (26, 26), de robots (25), d'ordinateurs avec pupitres commandé selon programme et d'unités-réception de signaux de radio (7), de tables télescopique 31, de revêtements extérieurs 19', de sensors de robot en forme de couronne (7'), de capots de revêtement 9, peut etre pivoté, indépendent l'un de l'autre et rélatif les un par rapport aux autres et par rapport à l'axe d'ensemble.

2. Installation de stockage déplaçable et système de stockage avec unités de travail selon la revendication 1, caractérisée en ce que l' assemblage de rotation sur la partie supérieure (3) de la rangée de rayonnage (1) comporte un robot (25) dont les largeurs du bras articulé (25'), par rapport au rayon de l'installation de stockage déplaçable avec unités de travail et à l'hauteur des rangées de rayonnage (1) sont accordés de façon que le bras articulé (25') peut desservir les cotés de rangées de rayonnage à l'axe centrale (1) et peut s'étendre pour la prise, à travers les couloir d'accès (2,2'), aux plaques de travail (26,26') et aux machines, aux installations et aux points de préparation (32).

3. Installation de stockage déplaçable et système de stockage avec unités de travail selon la revendication 1 oú 2, caractérisée en ce que le robot de la rangée de rayonnage intérieure (1) est monté sur un apparail d'élévation (27) et que les largeurs du bras articulé (25') par rapport au rayon de l'installation de stockage déplaçable avec unités de travail et par rapport à l'hauteur des rangées de rayonnage (1) sont accordés de façon que le bras articulé (25') peut desservir de l'intérieur les rangées de rayonnage (1) et peut s'étendre pour la prise, à travers les couloir d'accès (2,2'), aux plaques de travail (26,26') aux machines, aux installations et aux points de préparation (32) et peut être lever par l'apparail d'élévation (27), à travers les bande passante de l'assemblage de rotation (3) et de leurs unités de travail, de façon que le bras articulé (25') peut être librement pivoter au-dessus les rangées de rayonnage (1) et des assemblages de rotation (3) et peut desservir les cotés de rangées de rayonnage (1) qui sont situées à l'extérieur par rapport à l'axe centrale, et peut atteindre de cette position avec son bras articulé (25), aussi la plaque de travail (26') et des machines, des installations et des points de préparation (32), et en ce que dans le cas d'une installation de stockage déplaçable dont les couloir d'accès (2) sont très large, l'ensemble de la rangée de rayonnage intérieure (1) avec l'apparail d'élévation (27), l'assemblage de rotation (3) et le robot (25) est déplaçable horizontalement sur des rails de roulement et de guidage à travers le couloir d'accès (2) dans la direction du revêtement (19), et que d'autres robots (25) sont disposés pour le support dans le rayon intérieur des rangées de rayonnage (1).

4. Installation de stockage déplaçable et système de stockage avec unités de travail selon une des revendication 1 à 3, caractérisée en ce qu' additionnellement à l'unité de robot (25) dans l'intérieur des rangées de rayonnage (1) àr la partie supérieure sont prévues et fixées sur une assemblage de rotation (3) des autres unités de robot (25) à une table télescopique (31) qui disposent également d'une bande passante et par le placement sur une assemblages de rotation (3) propre sont montées des unités de robot (25) qui sont librementpivotant par rapport à l'axe centrale propre, et avec leurs bras articulé (25') sont librement déplaçable au-dessus des rangées de rayonnage (1) avec des assemblages de rotation (3) et les unités de travail et peuvent desservir les rangées de rayonnage (1) de l'extérieur à travers des couloirs d'accès (2,2') et de la même position peuvent librement atteindre toutes les unités de travail, et en ce que, les couloirs d'accès (2) peuvent être enfermer par un capot de revêtement (9) qui est disposé au-dessus le robot (25) de la rangée de rayonnage intérieure (1) et sont étanchés avec garnitures (30) qui sont disposées entre le revêtement extérieur (19) qui n'est pas pivotant et le revêtement extérieur (19') qui est pivotant et le capot de revêtement (9), et en ce que des installations de loges froides, des ordinateurs de haute performance et des appareils de procédé sont installés dans les rangées de rayonnage intérieures (1), et pour l'exécution de procédé, le système total est enfermé hermétiquement et protégé contre des influences de l'environnement par le revêtement extérieur (19,19'), le capot de revêtement (9) et les garnitures (30) et que quelque-unes des rangées de rayonnage 1 sont separées entre eux l'une de l'autre par des garnitures marginales et additionnelles (30) par l'insértion des capots de revêtement (9) aux assemblages de rotation (3) et aux parois lateraux en forme de couronne toute autour du périmètre qui s'étendent des parties supérieures des rangées de rayonnage (1) jusqu'à la traverse de la base 29 et dont les couloirs d'accès (2,2') sont aussi enfermés par des éléments de paroi latéral.

5. Installation de stockage déplaçable et système de stockage avec unités de travail selon une des revendication 1 à 4, caractérisée en ce que l'installation de stockage déplaçable avec unités de travail est fixée sur la traverse de la base (29) qui en outre comporte un moteurs d'entrainement (24) et une alimentation de courant (24') et qui permets horizontalement un libre déplacement du système total, et en ce qu'un sensor en forme de couronne (7') qui est monté sur une assemblages de rotation (3) et fixé au revêtement extérieur (19') est librement pivotant par rapport l'axe central du système total et qui comporte à son périmètre des sensors optiques de lumière qui enregistrent les positions du système total et en ce que toutes les assemblage de rotation (3) à leurs unités de travail sont equipées avec moteurs d'entrainement (24) et qu'un ordinateur de commande à pupitre commandé selon programme et une unités-signaux de radio (7) est installé dans l'unité de travail (26') qui programment, commandent et contrôlent le système total de l'installation de stockage déplaçable avec unités de travail d'une manière que l'installation de stockage déplaçable avec unités de travail est capable d'exécuter entièrement autonom des opérations, des deplacements visés et d'adaptations aux deplacements visés.

6. Installation de stockage déplaçable et système de stockage avec unités de travail selon la revendication 5, caractérisée en ce qu'un pupitre de command (33) est fixé au revêtement extérieur (19') par lequel le système total de l'installation de stockage avec unités de travail peut être piloter semi-automatiquement par un opérateur-passager et d'où peuvent être programmer les deplacements visés et les adaptations aux deplacements visés qui sont commandé et contrôlé par l'ordinateur de commande à pupitre commandé selon programme (7).

7. Installation de stockage déplaçable et système de stockage avec unités de travail selon la revendication 1, caractérisée en ce que la table téléscopique (31), comporte des assemblages de rotation (3) aux unités-ordinateur (7) et qui disposent d'une conduite de câbles (28) pour l'alimentation de courant.

8. Installation de stockage déplaçable et système de stockage avec unités de travail selon la revendication 7, caractérisée en ce que les assemblages de rotation (3) à la partie supérieure de la rangées de rayonnage intérieure (1) comportent un ordinateur à pupitre commandé selon programme (7) qui dispose d'un autre assemblage de rotation (3) et table téléscopique (31) et qui ne depasse pas le diamètre de la bande passante des unités de travail au bord extérieur et que l'apparail d'élévation (27) permet de descendre l'ordinateur à pupitre commandé selon programme (7) jusqu'à qu'il est au ras du bord supérieur de la plaques de travail (26), qu'une plaque de rercouvrement est placé sur le pupitre de commande (7) qui enferme la bande passante et en ce que l'ouverture d'accès (2) peut être enfermé par un segment du capot de revêtement (9) qui est librement pivotant sur une assemblage de rotation (3) propre.
